# EUROPÄISCHE PATENTSCHRIFT

(11) **EP 2 623 256 B1**
(45) Veröffentlichungstag und Bekanntmachung des Hinweises auf die Patenterteilung: **03.02.2016**
(21) Anmeldenummer: 13154236.7
(22) Anmeldetag: 06.02.2013
(51) Int. Cl.: B23Q 1/48, B23Q 1/66, B23Q 7/14

(54) **Werkzeugmaschine mit Palettenwechselvorrichtung**
Machine tool with pallet change apparatus
Machine-outil dotée d'un dispositif de remplacement de palettes

(30) Priorität: 06.02.2012 DE 102012201728
(43) Veröffentlichungstag der Anmeldung: 07.08.2013
(73) Patentinhaber: DECKEL MAHO Pfronten GmbH, 87459 Pfronten (DE)
(72) Erfinder: Moder, Bernd, 86980 Ingenried (DE); Jung, Robert, 87459 Pfronten (DE)
(74) Vertreter: MERH-IP Matias Erny Reichl Hoffmann Patentanwälte PartG mbB

(56) Entgegenhaltungen:
- EP-A1- 2 047 946
- EP-A2- 0 356 216
- EP-A2- 0 462 533
- WO-A1-02/45902
- JP-A- H0 475 844
- JP-A- 2004 338 054
- JP-A- 2009 297 821
- US-A- 5 531 004
- US-A- 5 992 608
- US-A1- 2004 107 556
- US-A1- 2007 289 115

## Beschreibung

Die Erfindung betrifft eine Werkzeugmaschine mit einer Palettenwechselvorrichtung.

Programmgesteuerte Fräs- und Bohrmaschinen zur Serienbearbeitung von Werkstücken und sind häufig mit Palettenwechslern ausgestattet, die einen kurzzeitigen Austausch der Werkstücke ermöglichen und damit die Spanleistung bei verminderten Totzeiten vergrößern. Die Paletten werden außerhalb der Werkzeugmaschine mit Werkstücken bestückt und auf oder an einem Palettenträger eines Palettenwechslers lösbar befestigt. Durch eine Drehbewegung des Palettenwechslers wird die Palette über dem Werkstücktisch positioniert und nach einer Absenkbewegung auf diesem Tisch gespannt. Die Befestigung einer Palette des Palettenwechslers erfolgt durch eine Hubbewegung und den dadurch erzielten Eingriff eines haken- bzw. klauenförmigen Palettenträgers in eine entsprechende Ausnehmung am Außenrand der Palette.

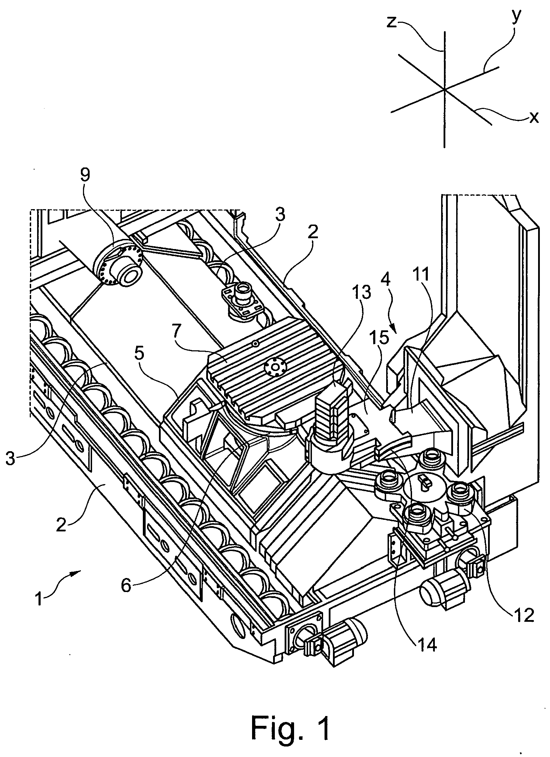

Figur 1 zeigt ein Beispiel einer derartigen Werkzeugmaschine 1 im Grundaufbau, wie sie beispielsweise aus der EP 2 047 946 B1 bekannt ist, die ein Maschinenbett 2, auf dem eine Palettenwechselvorrichtung 4 angeordnet ist mit einer Wechseleinrichtung 15 mit Klauen 14 zum Ergreifen von Paletten im Rahmen des Palettenwechselvorgangs, und einen Schlitten 5 aufweist, der einen Werkstücktisch 6 trägt mit einer ersten Palette 7 zum Aufspannen eines Werkstücks zur Bearbeitung an einer Arbeitsspindel 9. Ein Palettenträger 12 ist zum Tragen einer (nicht gezeigten) Wechselpalette mit einem zweiten Werkstück zum Austausch gegen die erste Palette 7 vorgesehen. Führungsschienen 3 sind auf dem Maschinenbett 2 montiert und der Schlitten 5 ist entlang der Führungsschienen 3 in einer X-Richtung längs des Maschinenbetts 2 verfahrbar. Die Palettenwechselvorrichtung 4 ist an einem von der Spindel 9 abgewandten Ende der Führungsschienen 3 angeordnet und über einen Tragarm 11 seitlich an dem Maschinenbett 2 befestigt. Ein Motor 13 zum Drehen der Wechseleinrichtung 15 um 180° in einer X-Y-Arbeitsebene zum Austausch der Paletten ist direkt auf einer Tragplatte der Wechseleinrichtung 15 montiert.

Soll anstelle des auf der ersten Palette 7 befestigten Werkstücks das auf der Wechselpalette befestigte Werkstück von der Arbeitsspindel 9 bearbeitet werden, so fährt der erste Schlitten 5 entlang der ersten Führungsschienen 3 in Richtung der Palettenwechselvorrichtung 4, bis eine Wechseistellung erreicht ist, in der Abstand und Position zwischen dem Rundtisch 6 und dem Palettenträger 12 so eingestellt sind, dass die Wechseleinrichtung 15 der Palettenwechselvorrichtung 4 sowohl in die erste Palette 7 als auch in die Wechselpalette eingreifen kann. Anschließend wird durch Anheben der Wechseleinrichtung 15, Drehen der Wechseleinrichtung 15 um eine zur Z-Richtung parallele Achse und Absenken der Wechseleinrichtung 15 die erste Palette 7 durch die Wechselpalette ausgetauscht. Der Schlitten 5 wird dann zusammen mit der auf dem Drehtisch 6 befindlichen Wechselpalette entlang der Führungsschienen 3 in Richtung der Spindel 9 verfahren, so dass eine ungehinderte Bearbeitung des auf der Wechselpalette gespannten Werkstücks erfolgen kann.

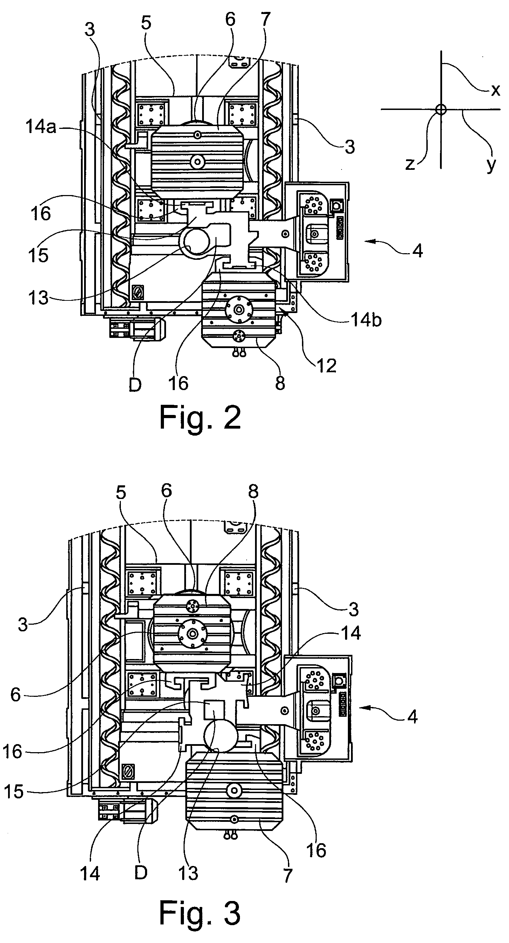

Figuren 2 und 3 veranschaulichen zwei Stadien des oben beschriebenen Palettenwechselvorgangs an einer Werkzeugmaschine genauer:

In Figuren 2 ist ein Stadium gezeigt, in dem die Klauenelemente 14 einer Wechseleinrichtung 15 in Aufnahmeelemente 16 sowohl der ersten Palette 7 als auch einer zweiten Palette 8 (Wechselpalette) eingreifen. Hierzu befinden sich der Rundtisch 6 sowie der Palettenträger 12 in Wechselstellung, d.h. in vordefinierter Ausrichtung und Abstand zueinander.

Nun wird durch die Wechseleinrichtung 15 die erste Palette 7 mit der zweiten Palette 8 vertauscht, d.h. anstelle der ersten Palette 7 wird nun die zweite Palette 8 auf den Rundtisch 6 aufgesetzt. Dies erfolgt durch Anheben und Verdrehen der Wechseleinrichtung 15 um eine Achse D, die parallel zur Z-Richtung ausgerichtet Ist. Dann wird die Wechseleinrichtung 15 wieder in Z-Richtung abgesenkt, um die Wirkverbindung zwischen den Klauenelementen 14 und den entsprechenden Aufnahmeelementen 16 der ersten Palette 7 sowie der zweiten Palette 8 aufzuheben. Nunmehr wird die Wechseleinrichtung 15 erneut um deren Drehachse D in eine Grundstellunggedreht, um das in Figur 3 gezeigte Stadium zu erreichen. Jetzt kann der Schlitten 5 entlang der Führungsschienen 3 von der Palettenwechselvorrichtung 4 weg bewegt werden, um eine ungehinderte Bearbeitung des auf der zweiten Palette 8 angebrachten Werkstücks zu gewährleisten.

JP 2004 338054 A beschreibt eine Wechselvorrichtung an einem Palettenwechselarm, der mit einem Hebezylinder verbunden ist. Eine Setup-Basisdrehvorrichtung an einer Setup-Basisdrehwelle, die an einer Palettenindexaufbau-Basis vorgesehen ist. Eine an eine Stromquelle angeschlossene Zwischenwelle ist zwischen dem Palettenwechselarm und der Palettenindexaufbau-Basis installiert und mit einem ersten Zwischenzahnrad, das in die Wechselvorrichtung eingreift, und einem zweiten Zwischenzahnrad, das in die Setup-Basisdrehvorrichtung eingreift, montiert. Ein Kolbenteil des Hubzylinders wird angehoben, um zwischen Verbindung und Trennung der Wechselvorrichtung und dem ersten Zwischenzahnrad zu wechseln.

US 5 992 608 A beschreibt einen automatischen Palettenwechsler zum Wechseln einer inneren Palette innerhalb eines Schneidraums einer Werkzeugmaschine und einer äußeren Palette außerhalb des Schneidraums. Der Palettenwechsler weist ein Gehäuse und einen Arm auf, der anhebbar und drehbar an dem Gehäuse angebracht ist, wobei der Arm eine Drehwelle und einen Stützkopf an der Spitze der Drehwelle aufweist Ein erstes Paar von geteilten Greifarmen wird an ihren bezüglich des Stützkopfs proximalen Enden zwischen einer Ruheposition, in der das die Greifarme nebeneinander liegen, und einer Aktivposition, in der die Greifarme Ende an Ende liegen, verschwenkt. Ebenso wird ein zweites Paar von geteilten Greifarmen an ihren bezüglich des Stützkopfs proximalen Enden in einer entgegengesetzten Weise in Bezug auf das erste Paar verschwenkt. Ein Arm-Aktor ist operativ mit dem ersten und zweiten Paar verbunden, um jedes Paar von der Ruheposition in die Aktivposition zu verschwenken.

US 5 531 004 A beschreibt einen Arbeitsraum zum Schneiden eines Werkstücks, mit einem Bett mit einem Tisch zum Aufnehmen einer ersten Palette, einen Stützwürfel vor dem Bett zum Aufnehmen einer zweiten Palette, einem Gehäuse, das sich vom Bett aufwärts erstreckt, um einen Schneidraum zu definieren, der die erste Palette umgibt, und das eine Öffnung an der Vorderseite aufweist, einer Drehtür am Gehäuse, um die Öffnung zu verschließen, Drehbolzen zum Halten der Drehtür, und einem Palettenwechsler unter der Drehtür zum Wechseln der ersten und zweiten Palette.

WO 02/45902 A1 beschreibt eine Rundtakteinrichtung zum Einsatz in einer Mehrzahl von Bearbeitungsstationen, in deren Arbeitsbereichen jeweils mindestens eine Spanneinrichtung für wechselbare Werkstückträger angeordnet ist, wobei die Rundtakteinrichtung eine mit einer Hub- und Dreheinrichtung versehene Rundtakteinheit aufweist, an welcher Trägerelemente zur Aufnahme der Werkstückträger angeordnet sind. Die Hub- und Dreheinrichtung der Rundtakteinheit Ist mit einer Kolbenstange versehen, an welcher drehfest ein erstes Kupplungselement angeordnet Ist, das durch die Hubbewegung der Kolbenstange mit einem darüber liegenden weiteren Kupplungselement in Eingriff bringbar ist, welches die Kolbenstange umgibt und motorisch angetrieben ist. Die Kolbenstange ist während der Hubbewegung drehfixiert.

Es ist ein Verdienst der Erfinder erkannt zu haben, dass bei der in den Figuren 2 und 3 gezeigten Werkzeugmaschine die Abmessungen der Wechseleinrichtung 15 in der X-Y-Ebene relativ groß sind. Dieser Nachteil ist insbesondere darauf zurückzuführen, dass ein elektrischer Antrieb 13, der nötig ist, um die Wechseleinrichtung 15 in der X-Y-Ebene um die Drehachse D zu verdrehen, in die Wechseleinrichtung 15 selbst integriert ist. Infolge dessen ist es nur begrenzt möglich, in dem in Figur 3 gezeigten Stadium des Palettenaustauschprozesses (das heißt in der Wechselstellung) den Rundtisch 6 beliebig gegenüber der Wechseleinrichtung 15 zu bewegen, insbesondere die Werkstücktischebene zu verschwenken, was bei Verwendung eines Schwenkrundtischs zur 5-Achsbearbeitung grundsätzlich notwendig ist. Nachteiligerweise muss, bevor ein Verdrehen bzw. Verschwenken des Rundtischs 6 erfolgen kann, der Schlitten 5 mit dem Werkstücktisch zunächst entlang der Führungsschienen 3 von der Palettenwechselvorrichtung 4 in Richtung der Arbeitsspindel verfahren werden. Dies kostet jedoch Zeit und verringert den zur Verfügung stehenden Arbeitsraum der Werkzeugmaschine.

Die der Erfindung zugrunde liegende Aufgabe ist, eine Palettenwechselvorrichtung und eine Werkzeugmaschine mit Palettenwechselvorrichtung anzugeben, mit denen die oben beschriebenen Probleme vermieden werden können.

Zur Lösung dieser Aufgabe stelltdie Erfindung eine Werkzeugmaschine mitden Merkmalen des Patentanspruchs 1 bereit.

Vorteilhafte Ausgestaltungen bzw. Weiterbildungen des Erfindungsgedankens finden sich in den Unteransprüchen.

Die Palettenwechselvorrichtung zum Wechseln von Paletten an der Werkzeugmaschine umfasst eine Wechseleinrichtung mit Verbindungselementen zum lösbaren Verbinden der Palettenwechselvorrichtung mit Paletten, eine Drehantriebseinrichtung zum Drehen der Wechseleinrichtung mit Verbindungselementen in einer Arbeitsebene und eine Hubeinrichtung zum Anheben und Absenken der Wechseleinrichtung und damit der Arbeitsebene Innerhalb eines Arbeitsraums. Erfindungsgemäß ist die Drehantriebseinrichtung außerhalb des Arbeitsraums angeordnet.

Dadurch, dass sich die Drehantriebseinrichtung außerhalb des Arbeitsraums befindet, kann die Wechseleinrichtung kompakter ausgestaltet werden. Zudem wird es ermöglicht, einen Werkstücktisch, auf dem eine der Paletten montiert ist, ohne Einschränkungen zu drehen und zu schwenken, selbst wenn sich der Drehtisch sehr nahe an der Wechseleinrichtung befindet.

Da erfindungsgemäß die Drehantriebseinrichtung außerhalb des Arbeitsraums liegt, wird sie zudem besser vor Schmutz und Wasser, das während des Betriebs der Werkzeugmaschine anfällt, geschützt.

Ein weiterer Vorteil der Erfindung liegt darin, dass bei dieser erfindungsgemäßen Konstruktion die Wechseleinrichtung unabhängig von einer Drehwand, die den Arbeitsraum von dem Rüstplatz für die Paletten trennt, bewegt werden kann, insbesondere da keine Kabelverlegung durch die Drehwand erforderlich ist, um einen in der Wechseleinrichtung befindlichen Antrieb mit Energie zu versorgen wie im Stand der Technik.

Bevorzugterweise sind die Drehantriebseinrichtung sowie die Hubeinrichtung außerhalb des Arbeitsraums und insbesondere unterhalb des Arbeitsraums angebracht. Als Arbeitsraum wird hierbei insbesondere der Raum verstanden, der von der Palettenwechselvorrichtung benötigt wird, um einen Palettenaustauschprozess durchzuführen. Dieser umfasst in der X-Y-Arbeitsebene die Drehbewegung und in der Z-Richtung den Hubweg der Wechselvorrichtung. In einem weiteren Sinn kann vorzugsweise zum Arbeitsraum auch zusätzlich der Gesamtarbeitsraum der Werkstückbearbeitung zählen, der von der Werkzeugmaschine benötigt wird, um das auf dem Drehtisch aufgespannte Werkstück zu bearbeiten, das heißt der Raum zum Verfahren des Drehtischs und der Arbeitsspindel.

Bei einem besonders vorteilhaften Ausführungsbeispiel sind die Drehantriebseinrichtung und die Hubeinrichtung derart positioniert, dass die Wechseleinrichtung aus der Arbeitsebene nach unten "freigefahren" werden kann, das heißt die Wechseleinrichtung kann, zumindest mit ihren wesentlichen Komponenten, was die Baugröße anbetrifft, oder gar vollständig unterhalb der Ebene, die durch die Unterseite des Werkstücktischs in Normalstellung horizontal auf dem Maschinenbett bestimmt wird, aus dem Raum zwischen Werkstücktisch und Wechselpalette verfahren werden.

Gemäß einem weiteren Aspekt der Erfindung umfasst die erfindungsgemäße Palettenwechselvorrichtung zum Wechseln von Paletten an einer Werkzeugmaschine eine Wechseleinrichtung mit Verbindungselementen zum lösbaren Verbinden der Palettenwechselvorrichtung mit Paletten, eine Drehantriebseinrichtung zum Drehen der Wechseleinrichtung mit Verbindungselementen und eine Hubeinrichtung zum Anheben und Absenken der Wechseleinrichtung. Erfindungsgemäß ist der die Hubeinrichtung mit der Wechseleinrichtung drehfest verbunden, und die Drehantriebseinrichtung treibt die Hubeinrichtung an. Dabei wird das Antriebsmoment von der Drehantriebseinrichtung über die Hubeinrichtung auf die Wechseleinrichtung übertragen.

Ein besonderer Vorteil dieser Ausgestaltung liegt darin, dass anstelle von zwei Drehsäulen für Hub- und Drehantriebseinrichtung nur eine vorgesehen ist, was den Aufbau der Palettenwechselvorrichtung vereinfacht und kompakter gestaltet. Insbesondere in Verbindung mit der Anordnung der Hubeinrichtung und der Drehantriebseinrichtung unterhalb des Arbeitsraums bringt diese Ausgestaltung konstruktiv erhebliche Vorteile mit sich: Der Schwerpunkt wird nach unten verschoben und die Palettenwechselvorrichtung kann in vereinfachter Weise an dem Maschinenbett montiert werden, wobei bevorzugsweise die Hubeinrichtung und die Antriebseinrichtung unterhalb einer oberen Ebene des Maschinenbetts angeordnet sind, optional teilweise auch unterhalb einer unteren Ebene des Maschinenbetts.

Gemäß einer konstruktiv besonders vorteilhaften Ausführungsform der Erfindung ist auf der Außenseite der Drehsäule ein Stirnrad angebracht, und die Drehantriebseinrichtung weist ein Ritzel auf, das mit dem Stirnrad in Eingriff steht. Die Wirkverbindung ist so ausgestaltet, dass bei Drehung des Ritzels (bewirkt durch einen Elektromotor oder eine Hydraulik der Drehantriebseinrichtung) das Stirnrad gedreht und damit die Drehsäule um deren Längsachse gedreht wird. Auf diese Art und Weise lassen sich die Antriebseinrichtung und Hubeinrichtung kompakt und effizient miteinander kombinieren.

Die Drehantriebseinrichtung kann beispielsweise einen Servomotor umfassen, womit aufwändige Hydraulikantriebe zum Drehen der Wechseleinrichtung überflüssig werden.

Vorteilhafterweise steht das Ritzel während des Anhebens und Absenkens der Drehsäule kontinuierlich mit dem Stirnrad in Wirkverbindung. Auf diese Art und Weise ist es möglich, die Wechseleinrichtung in jeder Zwischenstellung (und sogar während des Anhebens der Drehsäule) zu drehen. Dabei kann beispielsweise die Länge des Ritzels größer als eine maximale Hubhöhe der Drehsäule sein.

Die Hubeinrichtung kann einen Druckmittelzylinder aufweisen, der unterhalb der Drehsäule und koaxial zur Drehsäule ausgerichtet ist. Auf diese Art und Weise können die Anschlüsse des Druckmittelzylinders (für Druckfluid, etc.) weit nach unten in das Maschinenbett oder unter das Maschinenbetts verlagert werden, was den Anschluss erleichtert, da in diesem Bereich der Werkzeugmaschine typischerweise mehr Raum zur Verfügung steht als in einem oberen Bereich der Werkzeugmaschine.

Die Drehsäule weist vorteilhafterweise einen oberen Abschnitt und einen unteren Abschnitt auf, wobei das Stirnrad im unteren Abschnitt an der Drehsäule befestigt ist, und wobei ein Durchmesser des oberen Abschnitts der Drehsäule größer ist als ein Durchmesser des unteren Abschnitts der Drehsäule. Auf diese Art und Weise kann einerseits Gewicht gespart werden (aufgrund des geringeren Durchmessers des unteren Abschnitts der Drehsäule ist dieser Abschnitt der Drehsäule pro Längeneinheit leichter, verglichen zum oberen Abschnitt der Drehsäule), andererseits ist eine ausreichend präzise Führung der Drehsäule gewährleistet (der große Durchmesser der Drehsäule im oberen Bereich ermöglicht eine präzise Führung der Drehsäule).

Vorteilhafterweise ist ein Durchmesser des oberen Abschnitts der Drehsäule geringer als ein Durchmesser des Stirnrads ausgestaltet, wobei eine Führungsstruktur zum Führen des oberen Abschnitts der Drehsäule einen Anschlag aufweist, an dem eine Oberseite des Stirnrads anschlägt (oder eine darauf angebrachte Gleitschicht, sodass sich selbst bei einem Anschlag das Stirnrads problemlos drehen lässt), wenn sich die Drehsäule in einer maximalen Hubposition oder geringfügig über der maximalen Hubposition befindet. Auf diese Art und Weise kann auf mechanische Art und Weise eine maximale Hubobergrenze definiert werden, womit eine elektronische Steuerung der Hubvorrichtung vereinfacht werden kann. Am Anschlag kann ein entsprechender Anschlagsensor vorgesehen sein, der den Anschlag detektiert. Zudem ist sichergestellt, dass eine maximale Hubobergrenze nicht versehentlich überschritten wird. Weiterhin kann ein Anschlag vorgesehen sein, auf dem eine Unterseite des Stirnrads (oder eine darauf angebrachte Gleitschicht) anschlägt, wenn sich die Drehsäule in einer minimalen Hubposition oder geringfügig unter der minimalen Hubposition befindet. Auch hier kann ein Anschlagsensor vorgesehen sein.

Gemäß einer Ausführungsform der Erfindung weist die Wechseleinrichtung ein sich innerhalb der Arbeitsebene erstreckendes Längselement auf, dass mittels Drehung der Drehsäule um die Längsachse innerhalb der Arbeitsebene verdrehbar ist, wobei an einem ersten Ende des Längselements ein erstes Verbindungselement zum Greifen einer ersten Palette angeordnet ist, dass sich innerhalb der Arbeitsebene in einer ersten Richtung von dem Längselement weg erstreckt, und wobei an einem zweiten Ende des Längselements ein zweites Verbindungselement zum Greifen einer zweiten Palette (Wechselpalette) angeordnet ist, dass sich innerhalb der Arbeitsebene in einer zweiten Richtung von dem Längselement wegerstreckt, die der ersten Richtung entgegengesetzt ist.

Vorteilhafterweise können das erste Verbindungselement und das zweite Verbindungselement jeweils einen ersten Abschnitt aufweisen, der sich von dem entsprechenden Ende des Längselements entlang der ersten Richtung beziehungsweise zweiten Richtung wegerstreckt, und jeweils einen zweiten Abschnitt aufweisen, der an den entsprechenden ersten Abschnitt angrenzt und sich von diesem in eine Richtung erstreckt, die (zumindest im Wesentlichen) parallel zur Längsrichtung des Längselements verläuft. Der zweite Abschnitt des ersten Verbindungselements kann zum Eingreifen in die erste Palette, und der zweite Abschnitt des zweiten Verbindungselements zum Eingreifen in die zweite Palette ausgebildet sein. Der Vorteil einer derartigen Ausgestaltung der Wechseleinrichtung wird später im Zusammenhang mit der Beschreibung einer erfindungsgemäßen Werkzeugmaschine beschrieben.

Bei einer vorteilhaften Ausgestaltung ist die Wechseleinrichtung zwischen einer Wechselstellung in der das Längselement eine erste Ausrichtung einnimmt, das erste Verbindungselement in die erste Palette, und das zweite Verbindungselement in die zweite Palette eingreifen kann, und einer Grundstellung, in der das Längselement eine zu der ersten Position verdrehte zweite Ausrichtung einnimmt, um eine senkrechte Achse (Z-Richtung) hin und her horizontal bewegbar. In der Grundstellung ist dann maximale Bewegungsfreiheit des Rundtischs gewährleistet.

Das Eingreifen in die erste Palette und in die zweite Palette (Greifstellung) sowie das Lösen des Eingriffs kann beispielsweise durch Anheben und Absenken der Wechseleinrichtung in Z-Richtung erfolgen, wenn sich die Wechseleinrichtung in der Wechselstellung befindet. Dabei ist es besonders vorteilhaft, wenn die Wechseleinrichtung dazu eingerichtet ist, über die Hubeinrichtung aus der Wechselstellung in Z-Richtung abgesenkt zu werden, nachdem oder bevor das Längselement aus der Wechselstellung in die Grundstellung dreht. Auf diese Weise kann die Wechseleinrichtung in Gänze aus dem Arbeitsraum herausgefahren werden, insbesondere aus dem Raum zwischen den Paletten.

Die Erfindung ist jedoch nicht auf eine solche Ausführungsform beschränkt und beinhaltet ebenfalls Ausführungsbeispiele, bei denen die Wechseleinrichtung dazu eingerichtet ist, in einer beliebigen Zwischenposition hinsichtlich der Z-Richtung (d.h. keine maximale Absenkung der Wechseleinrichtung in Z-Richtung) nach Freigabe der Paletten in die Grundstellung, die vorzugsweise eine Position mit Drehung um 90° in der X-Y-Ebene darstellt, verfahren zu werden.

Die Erfindung umfasst ebenfalls eine Werkzeugmaschine mit einem Werkstücktisch, der eine erste Palette trägt, sowie eine Palettenwechselvorrichtung, die einen Palettenträger zur Aufnahme einer Wechselpalette umfasst und dazu eingerichtet ist, diese Wechselpalette gegen die erste Palette auf dem Werkstücktisch auszutauschen. Dabei ist der Werkstücktisch auf Führungsschienen verfahrbar, die auf einem Maschinenbett angeordnet sind. Die Drehantriebseinrichtung und die Hubeinrichtung können unterhalb der oberen Ebene des Maschinenbetts angeordnet oder seitlich an dem Maschinenbett montiert sein. Dabei kann das Gehäuse des Palettenwechslers, in das die Drehantriebseinrichtung und die Hubeinrichtung integriert sind, in ein Aufnahmeprofil am vorderen Ende des Maschinenbetts angeschlossen sein oder seitlich an dem Maschinenbett befestigt werden.

Der Werkstücktisch ist als Schwenkrundtisch ausgebildet, dessen Arbeitsfläche entlang einer Y-Richtung orientierten Drehachse geschwenkt werden kann zur 5-Achsbearbeitung des auf der Arbeitsfläche des Werkstücktischs aufgespannten Werkzeugs. Der Schwenkrundtisch und der Palettenträger sind dabei so zueinander verfahrbar, dass der Abstand zwischen dem Schwenkrundtisch und dem Palettenträger derart eingestellt wird, dass die Wechseleinrichtung in Wechselstellung (Eingreifstellung) in die erste Palette und in die zweite Palette gelangen kann. Dabei sind die Wechseleinrichtung, der Schwenkrundtisch und die Paletten so dimensioniert und in Wechselstellung zueinander positioniert, dass die erste Palette und/oder die Wechselpalette gedreht und/oder geschwenkt werden können, ohne mit der Wechseleinrichtung zu kollidieren, wenn diese sich in der oben beschriebenen Grundstellung befindet.

Beispielsweise sind der Schwenkrundtisch und die Paletten in Wechselstellung so zueinander positioniert, dass ein Zentrum der ersten Palette und ein Zentrum der zweiten Palette jeweils äquidistant bezüglich einer Achse beabstandet sind, die die Drehachse der Drehsäule schneidet und parallel zu einer Verfahrrichtung des Werkstücktisches verläuft. Dies ermöglicht es, den Palettenträger am Rand der Werkzeugmaschine vorzusehen, was den verfügbaren Arbeitsraum für den Schwenkrundtisch maximiert und einer Person den Zugang zu dem Palettenträger vereinfacht.

In einem solchen Fall ist die oben beschriebene Ausgestaltung der Wechseleinrichtung besonders vorteilhaft, da trotz jeweiliger Versetzung der ersten Palette und der zweiten Palette gegenüber der Drehachse der Drehsäule die zweiten Abschnitte der Verbindungselemente jeweils stets parallel bezüglich der Verfahrrichtung des Werkstücktisches in die erste Palette/zweite Palette eingreifen, was aus statischen Gründen besonders sinnvoll ist, insbesondere wenn ein entsprechender Eingriffsmechanismus in der ersten Palette/zweiten Palette, in den die zweiten Abschnitte der Verbindungselemente eingreifen, mittig bezüglich eines Zentrums der Palette am Rand der Palette angeordnet ist.

Das Längselement kann so ausgestaltet sein, dass bei einem Verschwenken des Schwenkrundtischs in der Grundstellung des Längselements ein minimaler Abstand zwischen einer Unterseite des Schwenkdrehtischs und einem Bereich des Längselements, der zwischen dem ersten Verbindungselement und dem zweiten Verbindungselement liegt, geringer ist als ein Abstand zwischen einem ersten Ende und einem zweiten Ende des ersten Abschnitts des ersten Verbindungselements oder geringer ist als ein Abstand zwischen einem ersten Ende und einem zweiten Ende des ersten Abschnitts des zweiten Verbindungselements. Mit anderen Worten: die Unterseite des Schwenkdrehtischs kann in einem Bereich, der bei Verschwenken des Schwenkdrehtischs einem Bereich des Längselements zwischen dem ersten Verbindungselement und dem zweiten Verbindungselement gegenüberliegt, tiefer ausfallen als in anderen Bereichen der Unterseite des Schwenkdrehtischs, da in diesem Bereich mehr Raum zum Verschwenken zur Verfügung steht als im Bereich der Wechseleinrichtung, in dem das erste Verbindungselement oder das zweite Verbindungselement von dem Längselement in Richtung des Schwenkdrehtischs abragt.

Das Profil der Wechseleinrichtung kann so ausgestaltet sein, dass wenigstens ein Teil des Seitenprofils der Wechseleinrichtung bei einem Verschwenken des Schwenkrundtischs im Wesentlichen einem Profil der Unterseite des Schwenkdrehtischs entspricht, wenn sich das Längselement in der Grundstellung befindet, und wenn der Abstand zwischen der Unterseite des Schwenkrundtischs und dem Längselement in einem Bereich des Längselements zwischen dem ersten Verbindungselement und dem zweiten Verbindungselement minimal ist. Mit anderen Worten: Die Unterseite des Schwenkrundtischs ist dem Seitenprofil der Wechseleinrichtung entsprechend angepasst, sodass bei Verschwenken des Schwenkrundtischs der Raum zwischen Schwenkrundtisch und Wechseleinrichtung optimal ausgenutzt (durch den Schwenkrundtisch gefüllt) wird.

Die Hubeinrichtung kann eine Führungsstruktur aufweisen, die die Drehsäule in einem Bereich unmittelbar unterhalb der Wechseleinrichtung führt, wobei die Führungsstruktur auf einer Seite, die dem Schwenkrundtisch zugewandt ist, abgeschrägt ist beziehungsweise eine Ausnehmung aufweist, derart, dass sich die Führungsstruktur, ausgehend von einem der Wechseleinrichtung zugewandten Ende, nach unten hin in Richtung Schwenkrundtisch verbreitert, wobei sich der Schwenkdrehtisch bei Verschwenken durch den abgeschrägten Bereich oder die Ausnehmung hindurch bewegen kann. Auf diese Art und Weise kann dem Schwenkrundtisch zusätzlicher Raum zum Verschwenken zur Verfügung gestellt werden, ohne dass die Qualität der Führung der Drehsäule durch die Führungsstruktur nennenswert beeinträchtigt werden würde, da auf allen anderen Seiten keine Abschrägung en/Ausnehmungen vorgesehen sind, was für eine hohe Qualität der Führung ausreichend ist.

Die in den vorangehend beschriebenen Ausführungsformen erwähnten Vorteile des Zusammenspiels zwischen Schwenkrundtisch und Wechseleinrichtung (keine Kollision zwischen Schwenkrundtisch und Wechseleinrichtung trotz Verschwenken des Schwenkrundtischs in Grundstellung der Wechseleinrichtung) gelten analog für ein Zusammenspiel zwischen Palettenträger und Wechseleinrichtung, insofern der Palettenträger um eine Y-Richtung schwenkbar ausgestaltet ist, was beispielsweise vorteilhaft sein kann, um den Palettenträger leichter mit einem Werkstück bestücken zu können.

Weitere Vorteile der Erfindung werden im Folgenden am Beispiel bevorzugter Ausführungsbeispiele unter Bezugnahme auf die Figuren näher erläutert. Es zeigen:
- **Figur 1**: eine schematische perspektivische Darstellung einer herkömmlichen Werkzeugmaschine mit Palettenwechselvorrichtung;
- **Figur 2**: eine schematische Darstellung eines erstes Stadiums eines Palettenaustauschprozesses an einer herkömmlichen Werkzeugmaschine;
- **Figur 3**: eine schematische Darstellung zweites Stadiums eines Palettenaustauschprozesses an einer herkömmlichen Werkzeugmaschine;
- **Figur 4**: eine schematische Darstellung einer Palettenwechselvorrichtung gemäß einer Ausführungsform der Erfindung im Querschnitt;
- **Figur 5**: eine schematische Darstellung einer Palettenwechselvorrichtung gemäß einer Ausführungsform der Erfindung im Querschnitt;
- **Figur 6**: eine schematische Darstellung eines Teils einer erfindungsgemäßen Werkzeugmaschine mit Palettenwechselvorrichtung in einem ersten Stadium eines Palettenaustauschprozesses;
- **Figur 7**: eine schematische Darstellung eines Teils einer erfindungsgemäßen Werkzeugmaschine mit Palettenwechselvorrichtung in einem zweiten Stadium eines Palettenaustauschprozesses;
- **Figur 8**: eine schematische Draufsicht eines Teils einer erfindungsgemäßen Werkzeugmaschine in einem ersten Stadium eines Pa lettena ustauschprozesses;
- **Figur 9**: eine schematische Draufsicht einer erfindungsgemäßen Werkzeugmaschine beim Schwenken des Schwenkrundtischs;
- **Figur 10**: eine schematische Draufsicht eines Teils einer erfindungsgemäßen Werkzeugmaschine in einem ersten Stadium eines Palettenaustauschprozesses; und
- **Figur 11**: eine schematische Draufsicht einer erfindungsgemäßen Wechseleinrichtung.

In den Figuren sind identische beziehungsweise einander entsprechende Bereiche, Bauteile oder Bauteilgruppen mit denselben Bezugsziffern gekennzeichnet.

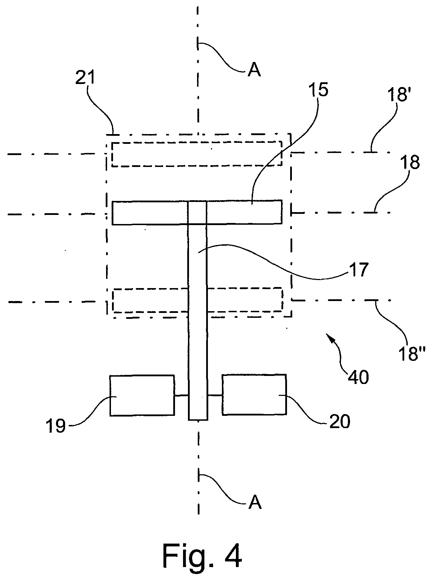

Figur 4 zeigt eine schematische Darstellung einer Palettenwechselvorrichtung 40 gemäß einer Ausführungsform der Erfindung im Querschnitt. Die Palettenwechselvorrichtung 40 weist auf: Eine Wechseleinrichtung 15 zum lösbaren Verbinden der Palettenwechselvorrichtung 40 mit Paletten; eine mit der Wechseleinrichtung 15 verbundene Drehsäule 17, wobei mittels Drehung der Drehsäule 17 um deren Längsachse A die Wechseleinrichtung 15 innerhalb einer Arbeitsebene 18 verdrehbar ist; eine Drehantriebseinrichtung 19, die mit der Drehsäule 17 in Wirkverbindung steht und mittels der die Drehsäule 17 um deren Längsachse A drehbar ist; und eine Hubeinrichtung 20 zum Anheben und Absenken der Drehsäule 17, um die Wechseleinrichtung 15 und damit die Arbeitsebene 18 innerhalb eines Arbeitsraums 21 anzuheben und abzusenken. Die Drehantriebseinrichtung 19 sowie die Hubeinrichtung 20 befinden sich außerhalb des Arbeitsraums 21.

Dadurch, dass sich die Drehantriebseinrichtung 19 und Hubeinrichtung 20 außerhalb des Arbeitsraums 21 befinden, kann die Wechseleinrichtung platzsparend ausgestaltet werden, womit es wiederum möglich ist, einen Rundtisch der Werkzeugmaschine, auf den die Palette mit dem zu bearbeitenden Werkstück aufgesetzt wird, ohne Einschränkung zu bewegen, insbesondere zu drehen und zu schwenken, ohne dabei mit der Wechseleinrichtung 15 zu kollidieren, selbst wenn sich der Rundtisch sehr nahe an der Wechseleinrichtung 15 befindet, was beispielsweise in der Wechselstellung der Fall ist, in der die auf dem Rundtisch befindliche Palette durch eine auf einem Palettenträger befindliche andere Palette ersetzt wird.

Bevorzugterweise befinden sich die Drehantriebseinrichtung 19 sowie die Hubeinrichtung 20 unterhalb des Arbeitsraums 21. Alternativ ist es möglich, die Drehantriebseinrichtung 19 sowie die Hubeinrichtung 20 seitlich oder oberhalb des Arbeitsraums 21 anzuordnen. Als Arbeitsraum wird hierbei insbesondere der Raum verstanden, der von der Palettenwechselvorrichtung 40 benötigt wird, um einen Palettenaustauschprozess durchzuführen.

Anhand von Figur 4 ist zu erkennen, dass die Arbeitsebene 18 der Wechseleinrichtung 15 nach oben (18') und nach unten (18") bewegt wird, wenn die Drehsäule 17 durch die Hubeinrichtung nach oben oder nach unten bewegt wird. Dabei entspricht Position 18' einem Anheben der Paletten (Wechseleinrichtung 15 in Eingriff mit Paletten 7, 8, Paletten 7, 8 nicht in Eingriff mit Schwenkdrehtisch 6 und Palettenträger 12), Position 18 einem Absenken der Paletten (Wechseleinrichtung 15 in Eingriff mit Paletten 7, 8, Paletten 7, 8 in Eingriff mit Schwenkdrehtisch 6 und Palettenträger 12), und Position 18" dem Freifahren aus dem Raum zwischen den Paletten (Wechseleinrichtung 15 nicht in Eingriff mit Paletten 7, 8, Paletten 7, 8 in Eingriff mit Schwenkdrehtisch 6 und Palettenträger 12). Beim vorliegenden Ausführungsbeispiel ist die Hubeinrichtung 20 ein hydraulisches Stellglied und die Drehantriebseinrichtung 19 als Servomotor ausgeführt. Die Drehantriebseinrichtung 19 als auch die Hubeinrichtung 20 können jedoch auch jeweils als elektrische oder hydraulische Einheiten ausgelegt sein.

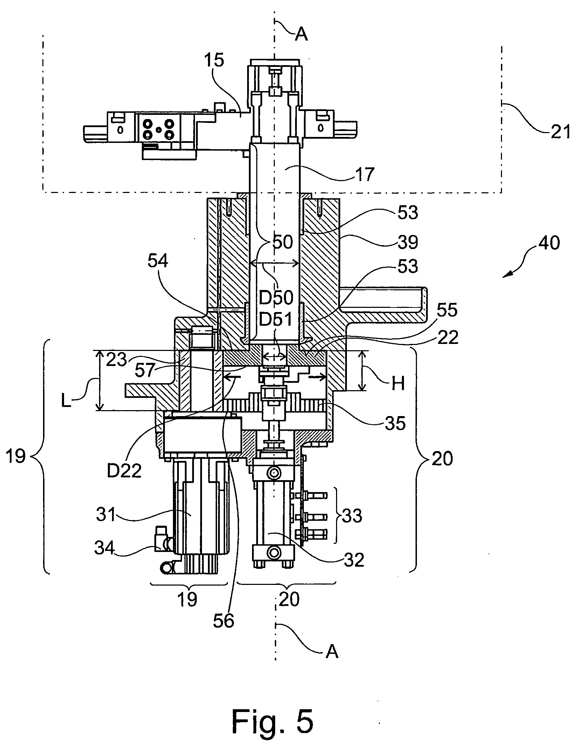

Wie der Ausführungsform in Figur 5 zu entnehmen ist, kann auf der Außenseite der Drehsäule 17 ein Stirnrad 22 angebracht sein, und die Drehantriebseinrichtung 19 ein Ritzel 23 aufweisen, das mit dem Stirnrad 22 in Eingriff steht. Bei Drehung des Ritzels 23 durch die Drehantriebseinrichtung 19 wird das Stirnrad 22 und damit die Drehsäule 17 um deren Längsachse A gedreht. Auf diese Art und Weise lassen sich die Drehantriebseinrichtung 19 und Hubeinrichtung 20 kompakt und störungsunanfällig miteinander kombinieren. Das Ritzel wird in dieser Ausführungsform von einem Servomotor 31 angetrieben, der sich unterhalb des Ritzels 23 befindet, und über einen Anschluss 34 mit elektrischer Energie versorgt. Aufgrund des Servoantriebs 31 ist bei der erfindungsgemäßen Vorrichtung die Grundstellung beliebig wählbar, was ein erheblicher Vorteil gegenüber einem hydraulischen Antrieb darstellt. Die Hubeinrichtung 20 weist einen Hubzylinder 32 auf, der unterhalb und koaxial zu der Drehsäule 17 angeordnet ist und diese anhebt und absenkt. Dazu wird der Hubzylinder 32 über entsprechende Fluidleitungen 33 mit Druckfluid versorgt. Auf diese Art und Weise können die Fluidleitungen 33 des Hubzylinders 32 (für Druckfluid, etc.) weit nach unten in das Maschinenbett oder unter das Maschinenbetts 2 verlagert werden, was den Anschluss der Fluidleitungen 33 erleichtert, da in diesem Bereich der Werkzeugmaschine 10 typischerweise hierfür mehr Raum zur Verfügung steht als in einem oberen Bereich der Werkzeugmaschine 10.

In der in Figur 5 gezeigten Ausführungsform ist eine Länge L des Ritzels 23 größer als eine maximale Hubhöhe H der Drehsäule 17. Auf diese Weise steht das Ritzel 23 während des Anhebens und Absenkens der Drehsäule 17 ununterbrochen mit dem Stirnrad 22 in Wirkverbindung. In dem in Figur 5 gezeigten Stadium steht das Stirnrad 22 mit dem obersten Teil des Ritzels 23 in Wirkverbindung (diese Position kann dazu genutzt werden, um die Wechseleinrichtung 15 in die Paletten 7, 8, eingreifen zu lassen). Würde die Drehsäule 17 aus diesem Stadium maximal abgesenkt, so stünde das Stirnrad 22 mit dem untersten Teil des Ritzels 23 in Wirkverbindung, wie durch Bezugsziffer 35 angedeutet ist (diese Position kann dazu genutzt werden, dass die Wechseleinrichtung 15 die Paletten 7, 8, freigibt, und um die Wechseleinrichtung 15 zwischen Greifstellung und Grundstellung zu drehen). Damit ist es möglich, die Drehsäule 17 in jedem Hub- bzw. Absenkstadium um deren Längsachse A zu drehen, was ein sehr flexibles Arbeiten der Wechselvorrichtung 15, auch bei unterschiedlichen Palettengrößen, ermöglicht. Alternativ kann die Drehantriebseinrichtung 19 so an die Hubeinrichtung 20 gekoppelt sein, dass sich diese mit der Drehsäule 17 nach oben und unten mit bewegt. In diesem Fall könnte die Länge der Ritzels 23 geringer ausfallen. Die Drehantriebseinrichtung 19 und Hubeinrichtung 20 befinden sich in dieser Ausführungsform unterhalb eines Maschinenbetts, auf bzw. an dem die Palettenwechselvorrichtung montiert ist.

Die Drehsäule 17 weist vorteilhafterweise einen oberen Abschnitt 50 und einen unteren Abschnitt 51 auf, wobei das Stirnrad 22 im unteren Abschnitt 51 an der Drehsäule 17 befestigt ist, und wobei ein Durchmesser des oberen Abschnitts D50 der Drehsäule 17 größer ist als ein (nicht konstanter) Durchmesser D51 des unteren Abschnitts 51 der Drehsäule 17. Auf diese Art und Weise kann einerseits Gewicht gespart werden (aufgrund des geringeren Durchmessers D51 des unteren Abschnitts 51 der Drehsäule 17 ist dieser Abschnitt der Drehsäule 17 pro Längeneinheit leichter, verglichen zum oberen Abschnitt D50 der Drehsäule 17), andererseits ist eine ausreichend präzise Führung der Drehsäule 17 gewährleistet (der große Durchmesser D50 der Drehsäule 17 im oberen Bereich 50 ermöglicht eine präzise Führung der Drehsäule 17 in Z-Richtung mit wenig Spiel in XY-Richtung (hohe mechanische Steifigkeit des oberen Bereichs 50 der Drehsäule 17).

Vorteilhafterweise ist der Durchmesser D50 des oberen Abschnitts 50 der Drehsäule 17 geringer als ein Durchmesser D22 des Stirnrads 22 ausgestaltet, wobei eine Führungsstruktur 53 zum Führen des oberen Abschnitts 50 der Drehsäule 17 einen Anschlag 54 aufweist, an dem eine Oberseite 55 des Stirnrads 22 anschlägt (oder eine darauf angebrachte Gleitschicht, sodass sich selbst bei einem Anschlag das Stirnrad 22 problemlos drehen lässt), wenn sich die Drehsäule 17 in einer maximalen Hubposition oder geringfügig über der maximalen Hubposition befindet. Auf diese Art und Weise kann auf mechanische Art und Weise eine maximale Hubobergrenze definiert werden, womit eine elektronische Steuerung der Hubvorrichtung 20 vereinfacht werden kann. Am Anschlag 54 kann ein entsprechender Anschlagsensor (nicht gezeigt) vorgesehen sein, der den Anschlag des Stirnrads 22 detektiert. Zudem ist sichergestellt, dass maximale Hubobergrenze nicht versehentlich überschritten wird. Weiterhin kann ein Anschlag 56 vorgesehen sein, auf dem eine Unterseite 57 des Stirnrads 22 (oder eine darauf angebrachte Gleitschicht) anschlägt, wenn sich die Drehsäule 17 in einer minimalen Hubposition oder geringfügig unter der minimalen Hubposition befindet. Auch hier kann ein entsprechender Anschlagsensor vorgesehen sein.

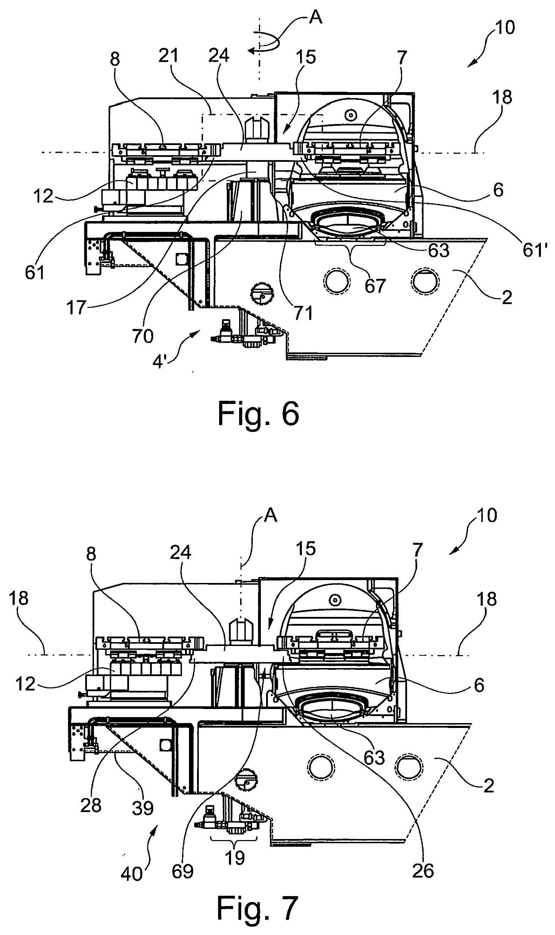

In Figuren 6 bis 9 ist beispielhaft gezeigt, wie sich die in Figuren 4 und 5 gezeigte Palettenwechselvorrichtung 40 in eine Werkzeugmaschine integrieren lässt. Die in Figuren 6 bis 9 gezeigte Werkzeugmaschine 10 weist auf: eine Palettenwechselvorrichtung 40 gemäß einer erfindungsgemäßen Ausführungsform; einen Schwenkrundtisch 6 zur Aufnahme einer ersten Palette 7; einen Palettenträger 12 zur Aufnahme einer zweiten Palette 8 (Wechselpalette); und Führungsschienen 3, entlang derer der Schwenkrundtisch 6 sowie der Palettenträger 12 relativ zueinander verfahrbar sind. Der Schwenkrundtisch 6 und der Palettenträger 12 sind insbesondere in eine Wechselstellung (in den Figuren 6, 7, 8 und 9 veranschaulicht) verfahrbar, in der ein Abstand zwischen dem Schwenkrundtisch 6 und dem Palettenträger 12 so eingestellt ist, das die Wechseleinrichtung 15 in Greifstellung (siehe Figuren 6, 7, und 8) in die erste Palette 7 und in die zweite Palette 8 eingreifen kann. Figur 7 zeigt die Wechseleinrichtung 15 in der Wechselstellung vor dem Eingriff in die erste Palette 7 und in die zweite Palette 8 (in diesem Stadium kann die Wechseleinrichtung 15 unterhalb der erste Palette 7 und in die zweite Palette 8 verdreht werden), und Figur 6 zeigt die Wechseleinrichtung 15 in der Wechselstellung während dem Eingriff in die erste Palette 7 und in die zweite Palette 8. Um einen Eingriff, ausgehend von dem in Figur 7 gezeigten Stadium in die erste Palette 7 und in die zweite Palette 8 zu erzielen, wird die Hubeinrichtung 20 so gesteuert, dass sich die Drehsäule 17 nach oben bewegt (Figur 6). Anschließend wird die Drehantriebseinrichtung 19 so angesteuert, dass die Wechseleinrichtung 15 um die Achse A gedreht wird (um 180°). Dann wird die Hubeinrichtung 20 so gesteuert, dass sich die Drehsäule 17 nach unten bewegt, womit die Paletten 7, 8 wieder (vertauscht) auf dem Drehtisch 6 und dem Palettenträger 12 abgesetzt werden (analog zu Figur 7).

Die Figuren 6 und 7 veranschaulichen, dass der Drehantriebsmotor 19 unterhalb der Ebene des Maschinenbetts 2 positioniert ist. Er wird vom Palettenwechslergehäuse 39 getragen, das am vorderen Ende des Maschinentischs angeschlossen ist.

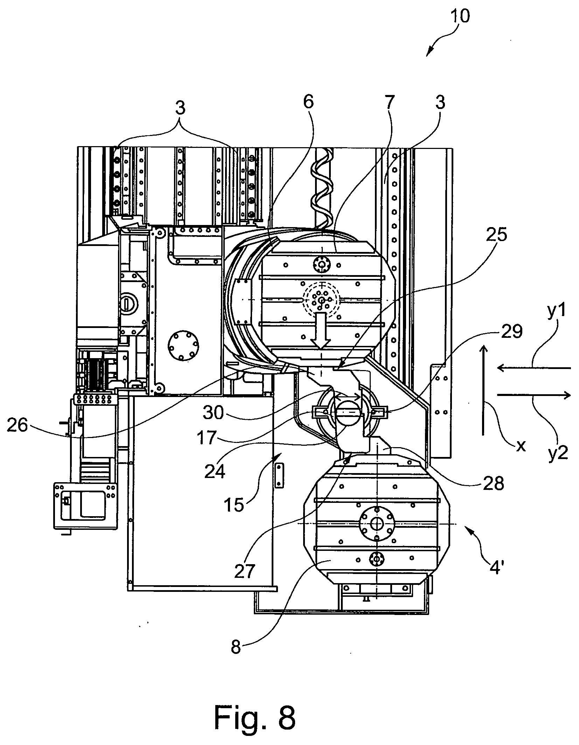

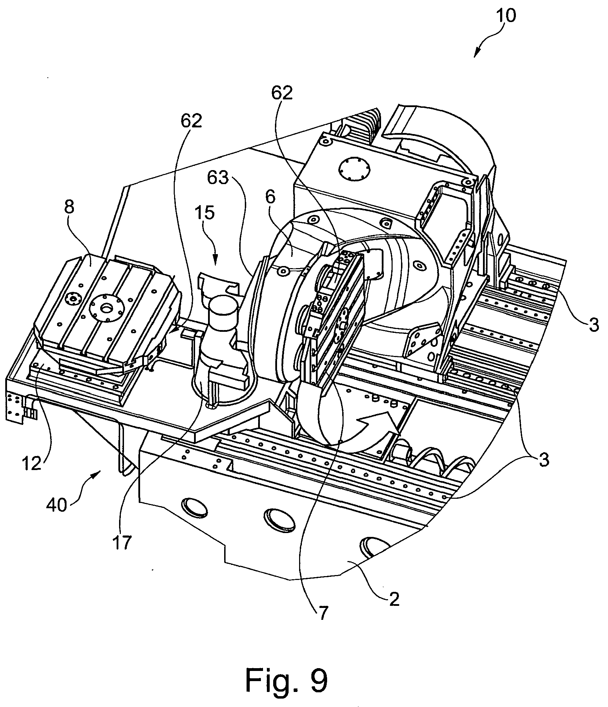

Wie in Figuren 8 und 9 gezeigt ist, weist gemäß einer Ausführungsform der Erfindung die Wechseleinrichtung 15 ein sich innerhalb der Arbeitsebene 18 erstreckendes Längselement 24 auf, das mittels Drehung der Drehsäule 17 um deren Längsachse A innerhalb der Arbeitsebene 18 verdrehbar ist, wobei an einem ersten Ende 25 des Längselements 24 ein erstes Verbindungselement (Klauenelement 26) zum Greifen einer ersten Palette 7 angeordnet ist, dass sich innerhalb der Arbeitsebene 18 in einer ersten Richtung Y1 von dem Längselement 24 weg erstreckt, und wobei an einem zweiten Ende 27 des Längselements 24 ein zweites Verbindungselement (Klauenelement 28) zum Greifen einer zweiten Palette 8 angeordnet ist, das sich innerhalb der Arbeitsebene 18 in einer zweiten Richtung Y2 von dem Längselement 24 wegerstreckt, die der ersten Richtung Y1 entgegengesetzt ist. Eine Relation der Länge 29 des Längselements 24 zur Breite 30 des Längselements 24 liegt vorzugsweise innerhalb eines Bereichs von 3,5 bis 1,5. Die aufgrund dieser Relation resultierende Form der Wechseleinrichtung 15 trägt zusätzlich dazu bei, dass der Rundtisch 6 frei gedreht werden kann, selbst wenn sich dieser in Wechselstellung mit dem Palettenträger 12 der Palettenwechselvorrichtung 40 befindet, wie im Folgenden beschrieben wird.

Um eine maximale Beweglichkeit des Rundtischs 6 zu garantieren, ist bei diesem Ausführungsbeispiel die Wechseleinrichtung 15 zwischen einer Wechselstellung (Greifstellung) (siehe Figur 8), in der das Längselement 24 eine erste Ausrichtung (annähernd parallel zur X-Richtung) einnimmt, das erste Klauenelement 26 in die erste Palette 7 und das zweite Klauenelement 28 in die zweite Palette 8 eingreifen, und einer Grundstellung (siehe Figur 9), in der das Längselement 24 eine zu der ersten Ausrichtung senkrechte zweite Ausrichtung (annähernd parallel zur Y-Richtung) einnimmt, und das erste Klauenelement 26 sowie das zweite Klauenelement 28 jeweilige Paletten 7, 8 freigeben, hin- und her bewegbar. Hierzu wird die Wechseleinrichtung 15 zunächst mittels der Hubeinrichtung 20 aus der Stellung 22 in Figur 5 nach unten verfahren. Nach Erreichen der untersten Position 35 (siehe Figur 5) wird dann das Längselement 24 um 90° in die Grundstellung gedreht. Dies ist insbesondere deshalb möglich, weil Dreh- und Hubsäule miteinander gekoppelt sind und die Antriebseinrichtung einschließlich Getriebe außerhalb des Arbeitsraums der Palettenwechselvorrichtung angeordnet ist. In der Grundstellung ist dann maximale Bewegungsfreiheit des Rundtischs 6 gewährleistet, wie in Figur 9 zu sehen ist: In Figur 9 ist der Rundtisch 6 in Wechselstellung in einer X-Z-Ebene verschwenkt, ohne mit der Wechseleinrichtung 15 zu kollidieren. Somit kann vorteilhafterweise nach jedem Palettenaustauschvorgang die Wechseleinrichtung 15 in die Grundstellung verfahren werden, wonach unmittelbar die Bearbeitung des Werkstücks auf dem Schwenkrundtisch 6 begonnen werden kann, ohne diesen hierzu horizontal verfahren zu müssen.

In den in Figuren 6 bis 9 beschriebenen Ausführungsformen befinden sich die Drehantriebseinrichtung 19 als auch die Hubeinrichtung 20 unterhalb der oberen Ebene des Maschinenbetts 2. Alternativ können die Drehantriebseinrichtung 19 als auch die Hubeinrichtung 20 seitlich vom Maschinenbett 2 angeordnet sein. Zudem ist bei den in Figuren 6 bis 9 beschriebenen Ausführungsformen die Palettenwechselvorrichtung 40 mit dem Maschinenbett 2 fest verbunden. Alternativ könnte jedoch die Palettenwechselvorrichtung 40 entlang von Führungsschienen auf oder an dem Maschinenbett verfahrbar angeordnet sein.

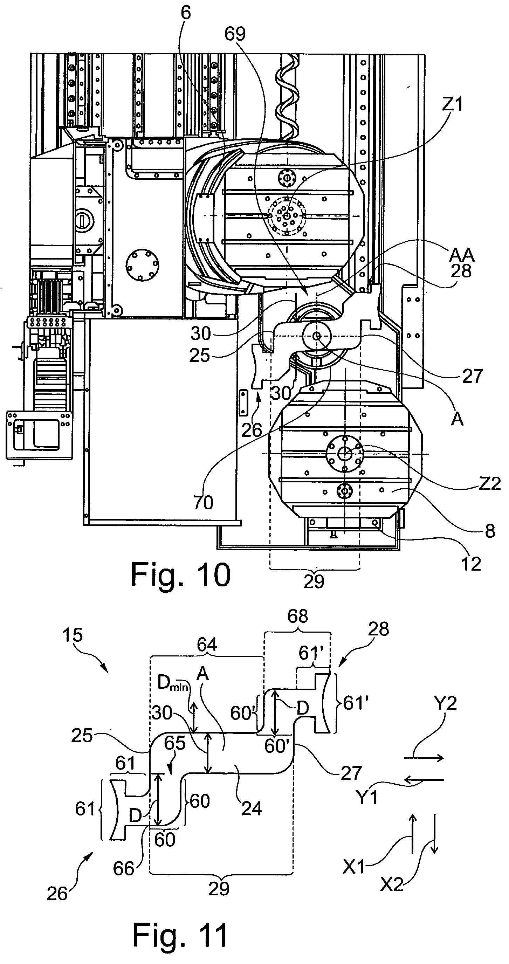

Wie in Figuren 10 und 11 zu sehen ist, können vorteilhafterweise das erste Verbindungselement (Klauenelement) 26 und das zweite Verbindungselement (Klauenelement) 28 jeweils einen ersten Abschnitt 60 aufweisen, der sich von dem entsprechenden Ende 25, 27 des Längselements 24 entlang der ersten Richtung X1, beziehungsweise zweiten Richtung X2 wegerstreckt, und jeweils einen zweiten Abschnitt 61 aufweisen, der an den entsprechenden ersten Abschnitt 60 angrenzt und sich von diesem in eine Richtung Y1, Y2 erstreckt, die (zumindest im Wesentlichen) parallel zur Längsrichtung des Längselements 24 verläuft (die Richtungen beziehen sich hier auf die Grundstellung des Längselements 24, im Gegensatz zu Figur 8 (Wechselstellung)). Der zweite Abschnitt 61 des ersten Verbindungselements 26 kann zum Eingreifen in die erste Palette 6, und der zweite Abschnitt 61' des zweiten Verbindungselements 28 zum Eingreifen in die zweite Palette 8 ausgebildet sein (und umgekehrt). Der Vorteil einer derartigen Ausgestaltung der Wechseleinrichtung 15 wird später im Zusammenhang mit der Beschreibung einer erfindungsgemäßen Werkzeugmaschine 10 beschrieben.

Beispielsweise sind der Schwenkrundtisch 6 und der Palettenträger 12 in Wechselstellung so zueinander positioniert, dass ein Zentrum Z1 der ersten Palette 6 und ein Zentrum Z2 der zweiten Palette 8 jeweils äquidistant bezüglich einer Achse AA beabstandet sind, die die Drehachse A der Drehsäule 17 schneidet und parallel zu einer Verfahrrichtung X des Schwenkrundtischs 6 verläuft. Dies ermöglicht es, den Palettenträger 12 bezüglich der Y-Richtung im Randbereich der Werkzeugmaschine 10 vorzusehen, was den verfügbaren Arbeitsraum für den Schwenkrundtisch 6 maximiert und einer Person den Zugang zu dem Palettenträger 12 vereinfacht.

In einem solchen Fall ist die oben beschriebene Ausgestaltung der Wechseleinrichtung 15 besonders vorteilhaft, da trotz jeweiliger Versetzung der ersten Palette 6 und der zweiten Palette 8 gegenüber der Drehachse A der Drehsäule 17 die zweiten Abschnitte 61, 61' der Verbindungselemente 26, 28 jeweils stets parallel bezüglich der Verfahrrichtung X des Schwenkrundtischs 6 in die erste Palette/zweite Palette 6, 8 eingreifen, was aus statischen Gründen besonders sinnvoll ist, insbesondere wenn ein entsprechender Eingriffsmechanismus 62 (siehe Figur 9) in der ersten Palette/zweiten Palette 6, 8, in den die zweiten Abschnitte 61, 61' der Verbindungselemente 26, 28 eingreifen, mittig bezüglich eines Zentrums Z1, Z2 der Paletten 6, 8 am Rand der Paletten 6, 8 angeordnet ist.

Das Längselement 24 kann so ausgestaltet sein, dass bei einem Verschwenken des Schwenkrundtischs 6 in der Grundstellung des Längselements 24 ein minimaler Abstand Dmin zwischen einer Unterseite 63 des Schwenkdrehtischs 6 und einem Bereich 64 des Längselements 24, der zwischen dem ersten Verbindungselement 26 und dem zweiten Verbindungselement 28 liegt, geringer ist als ein Abstand D zwischen einem ersten Ende 65 und einem zweiten Ende 66 des ersten Abschnitts 61 des ersten Verbindungselements 26 oder geringer ist als ein entsprechender Abstand des zweiten Verbindungselements 28. Mit anderen Worten: die Unterseite 63 des Schwenkdrehtischs 6 kann in einem Bereich 67, der bei Verschwenken des Schwenkdrehtischs 6 einem Bereich 64 des Längselements 24 zwischen dem ersten Verbindungselement 26 und dem zweiten Verbindungselement 28 gegenüberliegt, tiefer ausfallen als in anderen Bereichen der Unterseite 63 des Schwenkdrehtischs 6, da in diesem Bereich 64 mehr Raum zum Verschwenken zur Verfügung steht als im Bereich 68 der Wechseleinrichtung 15, in dem das erste Verbindungselement 26 oder das zweite Verbindungselement 28 von dem Längselement 24 in Richtung des Schwenkdrehtischs 6 abragt.

Das Profil der Wechseleinrichtung 15 kann so ausgestaltet sein, dass wenigstens ein Teil des Seitenprofils der Wechseleinrichtung 15 bei einem Verschwenken des Schwenkrundtischs 6 im Wesentlichen einem Profil der Unterseite 63 des Schwenkdrehtischs 6 entspricht, wenn sich das Längselement 24 in der Grundstellung befindet, und wenn der Abstand zwischen der Unterseite 63 des Schwenkrundtischs 6 und dem Längselement 24 in einem Bereich 64 des Längselements 24 zwischen dem ersten Verbindungselement 26 und dem zweiten Verbindungselement 28 minimal ist (d.h. Dmin entspricht). Mit anderen Worten: Die Unterseite 63 des Schwenkrundtischs 6 ist dem Seitenprofil der Wechseleinrichtung 15 entsprechend angepasst, sodass bei Verschwenken des Schwenkrundtischs 6 der Raum 69 zwischen Schwenkrundtisch 6 und Wechseleinrichtung optimal ausgenutzt (durch den Schwenkrundtisch 6 gefüllt) wird.

Die Hubeinrichtung 20 kann eine Führungsstruktur 70 aufweisen, die die Drehsäule 17 in einem Bereich unmittelbar unterhalb der Wechseleinrichtung 15 führt, wobei die Führungsstruktur 70 auf einer Seite, die dem Schwenkrundtisch 6 zugewandt ist, abgeschrägt ist beziehungsweise eine Ausnehmung 71 aufweist, derart, dass sich die Führungsstruktur 70, ausgehend von einem der Wechseleinrichtung 15 zugewandten Ende, nach unten hin in Richtung Schwenkrundtisch 6 verbreitert, wobei sich der Schwenkdrehtisch 6 bei Verschwenken durch den abgeschrägten Bereich oder die Ausnehmung 71 hindurch bewegen kann. Auf diese Art und Weise kann dem Schwenkrundtisch 6 zusätzlicher Raum zum Verschwenken zur Verfügung gestellt werden, ohne dass die Qualität der Führung der Drehsäule 17 durch die Führungsstruktur 70 nennenswert beeinträchtigt werden würde, da auf allen anderen Seiten keine Abschrägung en/Ausnehmungen vorgesehen sind, was für eine hohe Qualität der Führung 70 ausreichend ist.

Ist der Palettenträger 12 ebenfalls als Schwenkdrehtisch ausgestaltet, so gilt hier das oben Gesagte analog.

## Patentansprüche

1. Werkzeugmaschine (10),
- mit einem Schwenkrundtisch (6), der eine erste Palette (7) trägt, und
- mit einer Palettenwechselvorrichtung (40), die aufweist:
a) einen Palettenträger (12), der eine zweite Palette trägt (8);
b) eine Wechseleinrichtung (15);
c) eine Drehantriebseinrichtung (19) zum Drehen der Wechseleinrichtung (15) in einer Arbeitsebene (18);
d) eine Hubeinrichtung (20) zum Anheben und Absenken der Wechseleinrichtung (15) und damit der Arbeitsebene (18) Innerhalb eines Arbeitsraums (21), wobei die Hubeinrichtung (20) eine Drehsäule (17) aufweist und wobei die Drehantriebseinrichtung (19) außerhalb des Arbeitsraums (21) angeordnet ist;
- wobei die Wechseleinrichtung (15) ein sich innerhalb der Arbeitsebene (18) erstreckendes Längselement (24) aufweist, das um die Längsachse (A) der Drehsäule (17) innerhalb der Arbeitsebene (18) verdrehbar ist, und
wobei an einem ersten Ende (25) des Längselements (24) ein erstes Verbindungselement (26) zum Greifen der ersten Palette (7) angeordnet ist, das sich innerhalb der Arbeitsebene (18) In einer ersten Richtung (Y1) von dem Längselement (24) wegerstreckt, und
wobei an einem zweiten Ende (27) des Längselements (24) ein zweites Verbindungselement (28) zum Greifen der zweiten Palette (8) angeordnet ist, das sich innerhalb der Arbeitsebene (18) in einer zweiten Richtung (Y2) von dem Längselement (24) wegerstreckt, die der ersten Richtung (Y1) entgegengesetzt ist,
- wobei die Wechseleinrichtung (15) zwischen einer Wechselstellung, in der das Längselement (24) eine erste Ausrichtung einnimmt, und in der das erste Verbindungselement (26) in die erste Palette (7), und das zweite Verbindungselement (28) in die zweite Palette (8) eingreifen können, und
einer Grundstellung, in der das Längselement (24) eine zur ersten Ausrichtung um eine senkrechte Achse verdrehte zweite Ausrichtung einnimmt, hin- und her bewegbar ist,
- wobei der Schwenkrundtisch (6) und der Palettenträger (12) zueinander in eine Wechselstellungverfahrbar sind, in der der Abstand zwischen dem Schwenkrundtisch (6) und dem Palettenträger (12) so eingestellt ist, dass die Wechseleinrichtung (15) in der Wechselstellung in die erste Palette (7) und In die zweite Palette (8) eingreifen kann, und wobei die Wechseleinrichtung (15), der Schwenkrundtisch (6) und die Paletten (7, 8) so dimensioniert und positioniert sind, dass die erste Palette (7) und/oder die zweite Palette (8) durch Drehen oder Verschwenken des Schwenkrundtisches (6) gedreht und/oder verschwenkt werden können, ohne an die Wechseleinrichtung (15) zu stoßen, wenn sich diese in der Grundstellung befindet, indem das Längselement (24) so ausgestaltet ist, dass bei einem Verschwenken des Schwenkrundtischs (6) in der Grundstellung des Längselements (24) ein minimaler Abstand (Dmin) zwischen einer Unterseite (63) des Schwenkrundtischs (6) und dem Längselement (24) in einem Bereich (64) zwischen dem ersten Verbindungselement (26) und dem zweiten Verbindungselement (28) geringer ist als ein Abstand (D) zwischen einem ersten Ende (65) und einem zweiten Ende (66) des ersten Abschnitts des ersten Verbindungselements (26) oder geringer ist als ein Abstand zwischen einem ersten Ende und einem zweiten Ende des ersten Abschnitts des zweiten Verbindungselements (28).

2. Werkzeugmaschine (10) nach Anspruch 1, wobei das Profil der Wechseleinrichtung (15) so ausgestaltet ist, dass wenigstens ein Teil des Seitenprofils der Wechseleinrichtung (15) bei einem Verschwenken des Schwenkrundtischs (6) im Wesentlichen einem Profil der Unterseite (63) des Schwenkrundtischs (6) entspricht, wenn sich das Längselement (24) in der Grundstellung befindet, und wenn der Abstand zwischen der Unterseite (63) des Schwenkrundtischs (6) und dem Längselement (24) in einem Bereich des Längselementes zwischen dem ersten Verbindungselement (26) und dem zweiten Verbindungselement (28) minimal (Dmin) ist.

3. Werkzeugmaschine (10) nach einem der Ansprüche 1 bis 2, wobei die Hubeinrichtung (20) eine Führungsstruktur (70) aufweist, die die Drehsäule (17) in einem Bereich unmittelbar unterhalb der Wechseleinrichtung (15) führt, wobei die Führungsstruktur (70) auf einer Seite, die dem Schwenkrundtisch (6) zugewandt ist, abgeschrägt ist beziehungsweise eine Ausnehmung (71) aufweist, derart, dass sich die Führungsstruktur (70), ausgehend von einem der Wechseleinrichtung (15) zugewandten Ende, nach unten hin in Richtung Schwenkrundtisch (6) verbreitert, wobei sich der Schwenkdrehtisch (6) bei Verschwenken durch den abgeschrägten Bereich oder die Ausnehmung (71) hindurch bewegen kann.

4. Werkzeugmaschine (10) nach einem der Ansprüche 1 bis 3,
**dadurch gekennzeichnet, dass** die Drehantriebseinrichtung (19) sowie wenigstens ein Teil der Hubeinrichtung (20) unterhalb des Arbeitsraums (21) montiert sind.

5. Werkzeugmaschine (10) nach einem der Ansprüche 1 bis 4,
**dadurch gekennzeichnet, dass** auf der Außenseite der Drehsäule (17) ein Stirnrad (22) angeordnet ist, und die Drehantriebseinrichtung (19) ein Ritzel (23) aufweist, das mit dem Stirnrad (22) in Wirkverbindung steht, derart, dass bei Drehung des Ritzels (23) durch die Drehantriebseinrichtung (19) das Stirnrad (22) gedreht und damit die Drehsäule (17) um deren Längsachse (A) gedreht wird.

6. Werkzeugmaschine (10) nach Anspruch 5,
**dadurch gekennzeichnet, dass** die Hubeinrichtung (20) einen Druckmittelzylinder (32) aufweist, der unterhalb der Drehsäule (17) und koaxial zur Drehsäule (17) ausgerichtet ist.

7. Werkzeugmaschine (10) nach Anspruch 5 oder 6,
**dadurch gekennzeichnet, dass** das Ritzel (23) in jeder Hubposition mit dem Stirnrad (22) in Eingriff steht, und/oder wobei die Länge (L) des Ritzels (23) größer einer maximalen Hubhöhe (H) der Drehsäule (17) ist.

8. Werkzeugmaschine (10) nach einem der Ansprüche 5 bis 7, wobei die Drehsäule (17) einen oberen Abschnitt (50) und einen unteren Abschnitt (51) aufweist, wobei das Stirnrad (22) im unteren Abschnitt (51) an der Drehsäule (17) befestigt ist, und wobei ein Durchmesser (D50) des oberen Abschnitts (50) der Drehsäule (17) größer ist als ein Durchmesser (D51) des unteren Abschnitts (51) der Drehsäule (17).

9. Werkzeugmaschine (10) nach Anspruch 8, wobei der Durchmesser (D50) des oberen Abschnitts (50) der Drehsäule (17) geringer ist als ein Durchmesser (D22) des Stirnrads (22), und wobei eine Führungsstruktur (53) zum Führen des oberen Abschnitts (50) der Drehsäule (17) einen Anschlag (54) aufweist, an dem eine Oberseite (55) des Stirnrads (22) anschlägt, wenn sich die Drehsäule (17) in einer maximalen Hubposition oder geringfügig über der maximalen Hubposition befindet.

10. Werkzeugmaschine (10) nach einem der Ansprüche 1 bis 9, **dadurch gekennzeichnet, dass** die Wechseleinrichtung (15) dazu eingerichtet ist, über die Hubeinrichtung aus der Wechseistellung in Z-Richtung abgesenkt zu werden, bevor oder nachdem das Längselement (24) aus der Wechseistellung in die Grundstellung dreht.

11. Werkzeugmaschine (10) nach einem der Ansprüche 1 bis 10, wobei das erste Verbindungselement (26) und das zweite Verbindungselement (28) jeweils einen ersten Abschnitt (60) aufweisen, der sich von dem Längselement (24) entlang der ersten Richtung (Y1) beziehungsweise zweiten Richtung (Y2) wegerstreckt, und jeweils einen zweiten Abschnitt (61) aufweisen, der an den entsprechenden ersten Abschnitt (60) angrenzt und sich von diesem in eine Richtung erstreckt, die zumindest im Wesentlichen parallel zur Längsrichtung des Längselements (24) verläuft, wobei der zweite Abschnitt (61) des ersten Verbindungselements (26) zum Eingreifen in die erste Palette (7), und der zweite Abschnitt (61') des zweiten Verbindungselements (28) zum Eingreifen in die zweite Palette (8) ausgebildet sind.

## Claims

1. A machine tool (10), comprising
- a pivoting circular table (6) carrying a first pallet (7), and
- a pallet changing device (40) comprising:
a) a pallet carrier (12) carrying a second pallet (8),
b) a changing means (15);
c) a rotary drive means (19) for rotating said changing means (15) in a work plane (18);
d) a lifting means (20) for raising and lowering said changing means (15) and thus said work plane (18) within a work space (21), said lifting means (20) including a rotary column (17) and said rotary drive means (19) being arranged outside of said work space (21);
- wherein said changing means (15) comprises a longitudinal member (24) extending within said work plane (18) and rotatable about the longitudinal axis (A) of said rotary column (17) within said work plane (18), and
wherein a first connecting element (26) is arranged on a first end (25) of said longitudinal element (24) for gripping said first pallet (7), and extends away from said longitudinal member (24) in a first direction (Y1) within said work plane (18), and
wherein a second connecting element (28) is arranged on a second end (27) of said longitudinal element (24) for gripping said second pallet (8), and extends away from said longitudinal member (24) in a second direction (Y2) opposite said first direction (Y1) within said work plane (18),
- wherein said changing means (15) is movable back and forth between a changing position, in which said longitudinal member (24) assumes a first orientation and in which said first connecting element (26) can engage in said first pallet (7) and said second connecting element (28) can engage in said second pallet (8), and
- a home position, in which said longitudinal member (24) assumes a second orientation rotated about a vertical axis with respect to said first orientation,
- wherein said pivoting circular table (6) and said pallet carrier (12) are displaceable with respect to one another into a changing position, in which the distance between said pivoting circular table (6) and said pallet carrier (12) is set such that said changing means (15) can engage in said first pallet (7) and in said second pallet (8) in the changing position, and wherein said changing means (15), said pivoting circular table (6), and said pallets (7,8) are dimensioned and positioned such that said first pallet (7) and/or said second pallet (8) can be rotated and/or pivoted by rotating or pivoting said pivoting circular table without bumping into said changing means (15), when said changing means (15) is located in the home position, said longitudinal member (24) being configured such that during pivoting of said pivoting circular table (6) in the home position of said longitudinal member (24) a minimum distance (Dmin) between a lower side (63) of said pivoting circular table (6) and said longitudinal member (24) in a region (64) between said first connecting element (26) and said second connecting element (28) is less than a distance (D) between a first end (65) and a second end (66) of the first portion of said first connecting element (26) or is less than a distance between a first end and a second end of the first portion of said second connecting element (28).

2. The machine tool (10) according to claim 1, wherein the profile of said changing means (15) is configured such that, during pivoting of said pivoting circular table (6), at least part of the lateral profile of said changing means (15) substantially corresponds to a profile of said lower side (63) of said pivoting circular table (6) when said longitudinal member (24) is in the home position and when the distance between said lower side (63) of said pivoting circular table (6) and said longitudinal member (24) in a region of said longitudinal member between said first connecting element (26) and said second connecting element (28) is at a minimum (Dmin).

3. The machine tool (10) according to any one of the claims 1 to 2, wherein said lifting means (20) comprises a guide structure (70) guiding said rotary column (17) in a region directly below said changing means (15), said guide structure (70) being bevelled or comprising a recess (71), such that said guide structure (70), starting from one end facing said changing means (15), widens downwards towards said pivoting circular table (6), said pivoting circular table (6) being able to move through the bevelled region or said recess (71) during pivoting.

4. The machine tool (10) according to one of the claims 1 to 3,
**characterized in that** said pivoting circular table (19) and at least part of said lifting means (20) are mounted below said work space (21).

5. The machine tool (10) according to any one of the claims 1 to 4,
**characterized in that** a spur gear (22) is arranged on the outside of said rotary column (17), and said rotary drive means (19) comprises a pinion (23) operatively connected to said spur gear (22) such that, when said pinion (23) is rotated by said rotary drive means (19), said spur gear (22) and thus said rotary column (17) is rotated about the longitudinal axis (A) thereof.

6. The machine tool (10) according to claim 5,
**characterized in that** said lifting means (20) comprises a pressurising medium cylinder (32) arranged below said rotary column (17) and coaxially to said rotary column (17).

7. The machine tool (10) according to claim 5 or 6,
**characterized in that** said pinion (23) is engaged to said spur gear (22) in every lifting position and/or wherein the length (L) of said pinion (23) is greater than a maximum lifting height (H) of said rotary column (17).

8. The machine tool (10) according to one of the claims 5 to 7, wherein said rotary column (17) comprises an upper portion (50) and a lower portion (51), said spur gear (22) being fixed to said rotary column (17) in said lower portion (51) and a diameter (D50) of said upper portion (50) of said rotary column (17) being larger than a diameter (D51) of said lower portion (51) of said rotary column (17).

9. The machine tool (10) according to claim 8, wherein said diameter (D50) of said upper portion (50) of said rotary column (17) is less than a diameter (D22) of said spur gear (22), and wherein a guide structure (53) for guiding said upper portion (50) of said rotary column (17) comprises a stop (54) against which an upper side (55) of said spur gear (22) abuts when said rotary column (17) is located in a maximum lifting position or slightly above the maximum lifting position.

10. The machine tool (10) according to any one of the claims 1 to 9, **characterized in that** said changing means (15) is adapted to be lowered by said lifting means from said changing position in the Z direction before or after said longitudinal member (24) rotates from said changing position to the home position.

11. The machine tool (10) according to one of the claims 1 to 10, wherein said first connecting element (26) and said second connecting element (28) each comprise a first portion (60) expending from said longitudinal member (24) along the first direction (Y1) or second direction (Y2), respectively, and each comprise a second portion (61) adjacent to the corresponding first portion (60) and extending therefrom in a direction at least substantially parallel to the longitudinal direction of said longitudinal member (24), said second portion (61) of said first connecting element (26) being configured to engage in said first pallet (7), and said second portion (61) of said second connecting element (28) being configured to engage in said second pallet (8).

## Revendications

1. Machine-outil (10), comportant
- une table circulaire pivotante (6) qui porte une première palette (7) et
- un dispositif de changement de palette (40) qui présente :
a) un porte-palette (12) qui porte une seconde palette (8) ;
b) un dispositif de changement (15) ;
c) un moyen d'entraînement en rotation (19) pour faire tourner le dispositif de changement (15) dans un plan de travail (18) ;
d) un moyen de levage (20) pour soulever et abaisser le dispositif de changement (15) et donc le plan de travail (18) à l'intérieur d'un espace de travail (21), le moyen de levage (20) présentant une colonne rotative (17) et le moyen d'entraînement en rotation (19) étant agencé à l'extérieur de l'espace de travail (21) ;
- le dispositif de changement (15) présentant un élément longitudinal (24) s'étendant à l'intérieur du plan de travail (18) et mobile en rotation autour de l'axe longitudinal (A) de la colonne rotative (17) à l'intérieur du plan de travail (18), et
un premier élément de liaison (26) destiné à saisir la première palette (8) étant agencé à une première extrémité (25) de l'élément longitudinal (24) et s'étendant à l'intérieur du plan de travail (18) en s'éloignant de l'élément longitudinal (24) dans une première direction (Y1), et
un second élément de liaison (26) destiné à saisir la seconde palette (8) étant agencé à une seconde extrémité (27) de l'élément longitudinal (24) et s'étendant à l'intérieur du plan de travail (18) en s'éloignant de l'élément longitudinal (24) dans une seconde direction (Y2) opposée à la première direction (Y1), et
- le dispositif de changement (15) étant mobile en va-et-vient entre une position de changement dans laquelle l'élément longitudinal (24) adopte une première orientation et dans laquelle le premier élément de liaison (26) est capable de s'engager dans la première palette (7) et le second élément de liaison (28) est capable de s'engager dans la seconde palette (8), et
une position de base dans laquelle l'élément longitudinal (24) adopte une seconde orientation tournée par rapport à la première orientation autour d'un axe vertical,
- la table circulaire pivotante (6) et le porte-palette (12) étant déplaçables l'un par rapport à l'autre jusque dans une position de changement dans laquelle la distance entre la table circulaire pivotante (6) et le porte-palette (12) est réglée de telle sorte que dans la position de changement le dispositif de changement (15) est capable de s'enger dans la première palette (7) et dans la seconde palette (8), et
le dispositif de changement (15), la table circulaire pivotante (6) et les palettes (7, 8) étant dimensionnés et positionnés de telle sorte que par rotation ou pivotement de la table circulaire pivotante (6) la première palette (7) et/ou la seconde palette (8) sont capables de tourner et/ou pivoter sans heurter le dispositif de changement (15) lorsque celui-ci se trouve dans la position de base, du fait que l'élément longitudinal (24) est conçu de telle sorte que lors d'un pivotement de la table circulaire pivotante (6), dans la position de base de l'élément longitudinal (24), une distance minimale (Dmin) entre une face inférieure (63) de la table circulaire pivotante (6) et l'élément longitudinal (24) dans une zone (64) située entre le premier élément de liaison (26) et le second élément de liaison (28) est plus petite qu'une distance (D) entre une première extrémité (65) et une seconde extrémité (66) de la première portion du premier élément de liaison (26) ou plus petite qu'une distance entre une première extrémité et une seconde extrémité de la première portion du second élément de liaison (28).

2. Machine-outil (10) selon la revendication 1, le profil du dispositif de changement (15) étant conçu de telle sorte que lors d'un pivotement de la table circulaire pivotante (6) une partie au moins du profil latéral du dispositif de changement (15) correspond sensiblement à un profil de la face inférieure (63) de la table circulaire pivotante (6) lorsque l'élément longitudinal (24) se trouve dans la position de base et que la distance entre la face inférieure (63) de la table circulaire pivotante (6) et l'élément longitudinal (24) dans une zone de l'élément longitudinal entre le premier élément de liaison (26) et le second élément de liaison (28) est minimale (Dmin).

3. Machine-outil (10) selon l'une des revendications 1 à 2, le moyen de levage (20) présentant une structure de guidage (70) qui guide la colonne rotative (17) dans une zone immédiatement au-dessous du dispositif de changement (15), la structure de guidage (70) étant chanfreinée sur un côté tourné vers la table circulaire pivotante (6) ou présentant un évidement (71), de telle sorte que la structure de guidage (70) va en s'élargissant vers le bas en direction de la table circulaire pivotante (6) à partir d'une extrémité tournée vers le dispositif de changement (15), la table circulaire pivotante (6) pouvant se déplacer à travers la zone chanfreinée ou l'évidement (71) lors d'un pivotement.

4. Machine-outil (10) selon l'une des revendications 1 à 3,
**caractérisée en ce que** le moyen d'entraînement en rotation (19) ainsi qu'une partie au moins du moyen de levage (20) sont montés au-dessous de l'espace de travail (21).

5. Machine-outil (10) selon l'une des revendications 1 à 4,
**caractérisée en ce qu'**une roue dentée droite (22) est agencée sur le côté extérieur de la colonne rotative (17) et le moyen d'entraînement en rotation (19) comprend un pignon (23) qui est en liaison active avec la roue dentée droite (22), de telle sorte que lors d'une rotation du pignon (23) par le moyen d'entraînement en rotation (19) la roue dentée droite (22) est tournée et donc la colonne rotative (17) est tournée autour de son axe longitudinal (A).

6. Machine-outil (10) selon la revendication 5,
**caractérisée en ce que** le moyen de levage (20) comprend un vérin à fluide sous pression (32) qui est situé au-dessous de la colonne rotative (17) et orienté coaxialement par rapport à la colonne rotative (17).

7. Machine-outil (10) selon la revendication 5 ou 6,
**caractérisée en ce que** le pignon (23) est en prise avec la roue dentée droite (22) dans chaque position de levage, et/ou la longueur (L) du pignon (23) est supérieure à une hauteur de levage maximale (H) de la colonne rotative (17).

8. Machine-outil (10) selon l'une des revendications 5 à 7, la colonne rotative (17) comprenant une portion supérieure (50) et une portion intérieure (51), la roue dentée droite (22) étant fixée dans la portion inférieure (51) de la colonne rotative (17), et un diamètre (D50) de la portion supérieure (50) de la colonne rotative (17) étant supérieur à un diamètre (D51) de la portion inférieure (51) de la colonne rotative (17).

9. Machine-outil (10) selon la revendication 8, le diamètre (D50) de la portion supérieure (50) de la colonne rotative (17) étant inférieur à un diamètre (D22) de la roue dentée droite (22), une structure de guidage (53) destinée à guider la portion supérieure (50) de la colonne rotative (17) présentant une butée (54) contre laquelle vient buter une face supérieure (55) de la roue dentée droite (22) lorsque la colonne rotative (17) se trouve dans une position de levage maximale ou légèrement au-dessus de la position de levage maximale.

10. Machine-outil (10) selon l'une des revendications 1 à 9, **caractérisée en ce que** le dispositif de changement (15) est conçu pour être abaissé depuis la position de changement en direction Z par le moyen de levage avant ou après que l'élément longitudinal (24) se déplace en rotation depuis la position de changement jusque dans la position de base.

11. Machine-outil (10) selon l'une des revendications 1 à 10, le premier élément de liaison (26) et le second élément de liaison (28) présentant chacun une première portion (60) qui s'étend en s'éloignant de l'élément longitudinal (24) le long de la première direction (Y1) ou de la seconde direction (Y2), et présentant chacun une seconde portion (61) qui est adjacente à la première portion correspondante (60) et qui s'étend en s'éloignant de celle-ci dans une direction qui est au moins sensiblement parallèle à la direction longitudinale de l'élément longitudinal (24), la seconde portion (61) du premier élément de liaison (26) étant conçue pour venir s'engager dans la première palette (7), et la seconde portion (61') du second élément de liaison (28) étant conçue pour venir s'engager dans la seconde palette (8).
